# EUROPEAN PATENT APPLICATION

(11) **EP 2 944 749 A1**
(43) Date of publication of application: **18.11.2015**
(21) Application number: 14167886.2
(22) Date of filing: 12.05.2014
(51) Int. Cl.: E05C 9/04, B60R 7/04, E05B 83/28

(54) **A lock mechanism**

(71) Applicant: Tofas Turk Otomobil Fabrikasi Anonim Sirketi, Bursa (TR)
(72) Inventor: Helvaci, Abdullah, BURSA (TR); Bircicek, Serkan, BURSA (TR)
(74) Representative: Dericioglu Kurt, Ekin

(57) **Abstract**

The present invention relates to a lock mechanism (1), which enables the storage compartment provided at the ceiling of the trunk of light commercial vehicles to be opened and closed by the trunk lid, and which, by being more rigid, enables the storage compartment to carry more load, and prevents occurrence of noise problems when the vehicle is moving.

## Description

### Field of the Invention

The present invention relates to a lock mechanism which enables the storage compartment provided at the ceiling of the trunk of light commercial vehicles to be opened and closed by the trunk lid.

### Background of the Invention

There are some compartments in vehicles for storing products that are desired to be stored by the driver or passengers. The driver and the passengers place the products that they need in these storage compartments and store them therein securely. In light commercial vehicles, while there is a storage compartment at the front passenger seat, there may be a separate storage compartment on the ceiling of the vehicle trunk. The lid of this storage compartment opens at the direction of the rear trunk.

The Japanese patent document no. JP2006111212 (A), an application in the state of the art, discloses a vehicle ceiling storage. When the trunk lid (14) is closed, a folding part (46A) of an upper door garnish 46 is abutted on a lower surface of a rear part of an opening/closing handle (38). When the trunk lid (14) is closed, a locking claw (44) is engaged with a locking claw (42) of the opening/closing handle (38), and the opening/closing handle (38) cannot be operated when the storage box is closed.

The Japanese patent document no. JPH09169245 (A), an application in the state of the art, discloses a storage part on the vehicle ceiling. The storage part comprises a frame member (4) fixed to the cabin roof of a vehicle, a lid part (11) on the frame member (4) and a case part (13) located at the back face of the lid part (11.

### Summary of the Invention

The objective of the present invention is to provide a lock mechanism which, by being more rigid, enables the storage compartment to carry more load.

Another objective of the present invention is to provide a lock mechanism which prevents occurrence of noise problems while the vehicle is moving.

### Detailed Description of the Invention

A lock mechanism developed to fulfill the objective of the present invention is illustrated in the accompanying figures, in which:

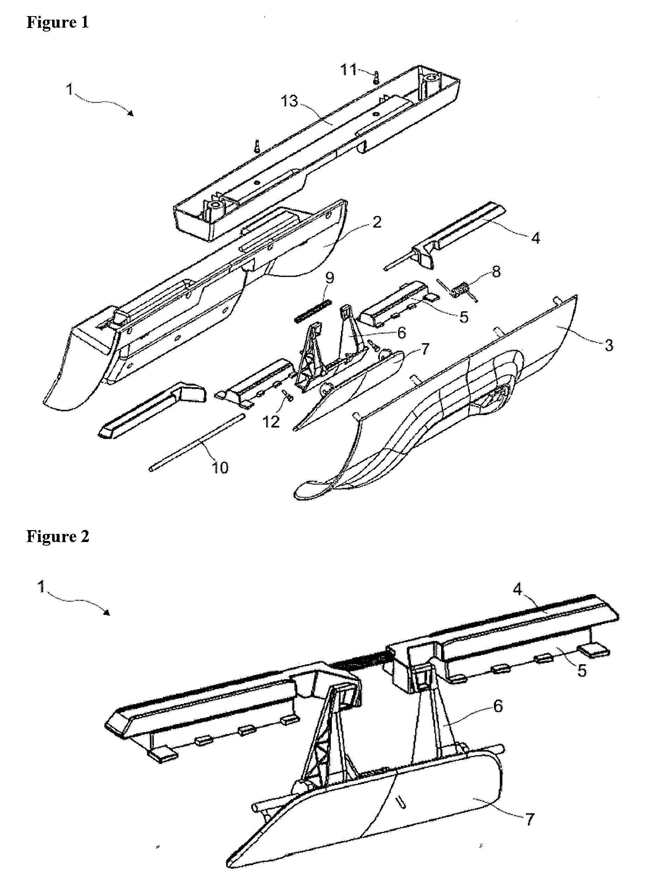

**Figure 1** is the exploded perspective view of the lock mechanism.
**Figure 2** is the perspective view of the lock latch, drive lever and opening handle.

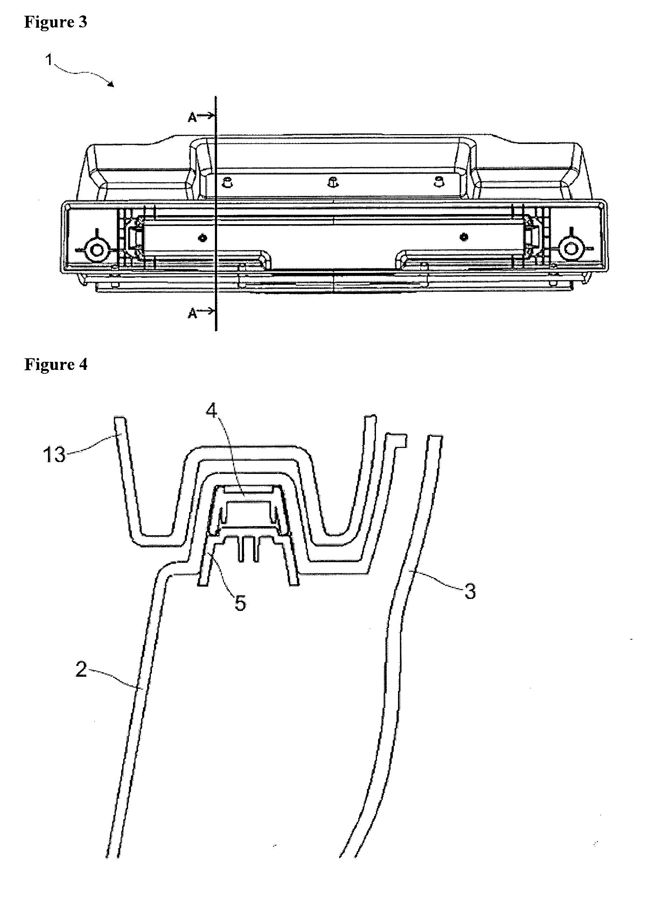

**Figure 3** is the top view of the lock mechanism.
**Figure 4** is the view of the A-A section in Figure 3.

The components shown in the figures are each given reference numbers as follows:
**1.** Lock mechanism
**2.** Lock body
**3.** Outer cover
**4.** Lock latch
**5.** Bearing
**6.** Drive lever
**7.** Opening handle
**8.** Opening handle spring
**9.** Lock spring
**10.** Opening handle pin
**11.** Rubber cleats
**12.** Opening handle rubber cleat
**13.** Lock striker

The lock mechanism (1), which enables the storage compartment provided at the ceiling of the trunk of light commercial vehicles to be opened and closed by the trunk lid, basically comprises
- at least one lock body (2) mounted to the vehicle body,
- at least one outer cover (3) which enables to cover the gap in the lock body (2),
- at least one lock latch (4) which is formed for the outer cover (3) to be attached to the lock body (2) and to prevent it from getting dislocated,
- at least one bearing (5) which provides bearing for the lock latch (4) and on which the lock latch (4) operates,
- at least one drive lever (6) which enables the lock latch (4) to be released from the lock housing and thus the outer cover (3) to be released,
- at least one opening handle (7) which enables the force applied by hand to be transmitted to the drive lever (6),
- at least one opening handle spring (8) which enables the opening handle (7) to return to the initial position after releasing the outer cover (3),
- at least one lock spring (9) which ensures that the lock latch (4) to remain in the lock housing,
- at least one opening handle pin (10) which enables connection of the opening handle (7) to the outer cover (3),
- at least one rubber cleat (11) which enables to minimize the noise that occurs,
- at least one opening handle rubber cleat (12) which absorbs the impact that occurs when the opening handle (7) returns to the initial position,
- at least one lock striker (13) which is located at the upper part of the lock body (2) and which receives the lock latch (4).

In the lock mechanism (1) in one embodiment of the invention, there is a lock body (2). The lock body (2) is mounted and fixed to the vehicle dashboard. The outer cover (3) is mounted to the part of the lock body (2) where there is an opening. The outer cover (3) is rotated around a point thereof at a desired angle and this way allows placing desired materials into the lock body (2). The outer cover (3) is attached to the lock body (2) by means of the lock latch (4). The lock latch (4) moves on the bearing (5). The outer cover (3) is released from the lock body (3) by applying a force on the opening handle (7) by hand. This force applied on the opening handle (7) is transmitted to the drive handle (6) and the drive lever (6) releases the lock latch (4) from the lock housing and enables to release the outer cover (3). The opening handle spring (8) enables to return the opening handle (7) to its initial position. Additionally, the lock spring (9) enables the lock latch (4) to remain in the lock housing. The opening handle (7) is connected to the outer cover (3) via the opening handle pin (10). The rubber cleats (11) and the opening handle rubber cleats (12) absorb and damp impacts. The lock striker (13) is located at the upper part of the lock body (2) and the lock latch (4) fits into this lock striker (13).

The lock mechanism (1) is used and operated as follows. When the opening handle (7) is pulled in opening direction, the drive lever (6) drives the lock latches (4) and enables the lock latches (4) to move in opening direction. In this case, the lock mechanism (1) is opened and the outer cover (3) is opened by the force of gravity. When the opening handle (7) is released, the opening handle spring (8) returns the opening handle (7) back to its original position. The lock latches (4) of the lock mechanism (1) of the present invention are operated in the opposite direction compared to their counterparts.

## Claims

1. A lock mechanism (1), which enables the storage compartment provided at the ceiling of the trunk of light commercial vehicles to be opened and closed by the trunk lid, basically **characterized by**
- at least one lock body (2) mounted to the vehicle body,
- at least one outer cover (3) which enables to cover the gap in the lock body (2),
- at least one lock latch (4) which is formed for the outer cover (3) to be attached to the lock body (2) and to prevent it from getting dislocated,
- at least one bearing (5) which provides bearing for the lock latch (4) and on which the lock latch (4) operates,
- at least one drive lever (6) which enables the lock latch (4) to be released from the lock housing and thus the outer cover (3) to be released,
- at least one opening handle (7) which enables the force applied by hand to be transmitted to the drive lever (6),
- at least one opening handle spring (8) which enables the opening handle (7) to return to the initial position after releasing the outer cover (3),
- at least one lock spring (9) which ensures that the lock latch (4) to remain in the lock housing,
- at least one opening handle pin (10) which enables connection of the opening handle (7) to the outer cover (3),
- at least one rubber cleat (11) which enables to minimize the noise that occurs,
- at least one opening handle rubber cleat (12) which absorbs the impact that occurs when the opening handle (7) returns to the initial position,
- at least one lock striker (13) which is located at the upper part of the lock body (2) and which receives the lock latch (4).

2. A lock mechanism (1) according to Claim 1, **characterized by** the lock body (2) which is mounted and fixed to the vehicle dashboard.

3. A lock mechanism (1) according to any one of the preceding claims, **characterized by** the outer cover (3) which is mounted to the part of the lock body (2) where there is an opening and which can be rotated around a point thereof at a desired angle.

4. A lock mechanism (1) according to any one of the preceding claims, **characterized by** the outer cover (3) which allows placing desired materials into the lock body (2).

5. A lock mechanism (1) according to any one of the preceding claims, **characterized by** the lock latch (4) which enables to attach the outer cover (3) to the lock body (2) and also moves on the bearing (5).

6. A lock mechanism (1) according to any one of the preceding claims, **characterized by** the opening handle (7) which releases the outer cover (3) from the lock body (2) upon application of a force thereon by hand.

7. A lock mechanism (1) according to any one of the preceding claims, **characterized by** the drive handle (6), to which the force applied on the opening handle (7) is transmitted, and which releases the lock latch (4) from the lock housing.

8. A lock mechanism (1) according to any one of the preceding claims, **characterized by** the drive handle (6) which enables to release the outer cover (3).

9. A lock mechanism (1) according to any one of the preceding claims, **characterized by** the opening handle spring (8) which enables to return the opening handle (7) to its initial position.

10. A lock mechanism (1) according to any one of the preceding claims, **characterized by** the lock spring (9) which enables the lock latch (4) to remain in the lock housing.

11. A lock mechanism (1) according to any one of the preceding claims, **characterized by** the opening handle pin (10) which enables connection of the opening handle (7) with the outer cover (3).

12. A lock mechanism (1) according to any one of the preceding claims, **characterized by** the lock striker (13) which is located at the upper part of the lock body (2) and which enables the lock latch (4) to fit therein.

13. A lock mechanism (1) according to any one of the preceding claims, **characterized by** the drive lever (6), which, when the opening handle (7) is pulled in opening direction, drives the lock latches (4) and enables the lock latches (4) to move in opening direction.

14. A lock mechanism (1) according to any one of the preceding claims, **characterized by** the opening handle spring (8) which enables to return the opening handle (7) to its original position when the opening handle (7) is released.
